# EUROPÄISCHE PATENTSCHRIFT

(11) **EP 2 517 315 B1**
(45) Veröffentlichungstag und Bekanntmachung des Hinweises auf die Patenterteilung: **10.08.2016**
(21) Anmeldenummer: 10788281.3
(22) Anmeldetag: 26.11.2010
(51) Int. Cl.: B23K 20/10, B23K 101/38, H01R 4/02, H01R 4/20, H01R 43/048, H01R 43/02

(54) **VERFAHREN UND ANORDNUNG ZUM ELEKTRISCH LEITENDEN VERBINDEN VON DRÄHTEN**
METHOD AND ASSEMBLY FOR THE ELECTRICALLY CONDUCTIVE CONNECTION OF WIRES
PROCÉDÉ ET AGENCEMENT DESTINÉS À RACCORDER DES FILS DE MANIÈRE ÉLECTRIQUEMENT CONDUCTRICE

(30) Priorität: 23.12.2009 DE 102009059307
(43) Veröffentlichungstag der Anmeldung: 31.10.2012
(60) Teilanmeldung: 15183709.3
(73) Patentinhaber: Schunk Sonosystems GmbH, 35435 Wettenberg (DE)
(72) Erfinder: KLEESPIESS, Björn, 35641 Schöffengrund (DE); MOOS, Andreas, 35452 Heuchelheim (DE); STROH, Dieter, 35435 Wettenberg (DE); WAGENBACH, Udo, 35418 Buseck (DE); WAGNER, Peter, 35435 Wettenberg (DE); ZIESLER, Alexander, 63843 Niedernberg (DE)
(74) Vertreter: Stoffregen, Hans-Herbert
(86) Internationale Anmeldenummer: PCT/EP2010/068278
(87) Internationale Veröffentlichungsnummer: WO 2011/076515

(56) Entgegenhaltungen:
- WO-A2-2008/148813
- WO-A2-2009/060080
- DE-B4- 10 229 565

## Beschreibung

Die Erfindung bezieht sich auf ein Verfahren zum elektrisch leitenden Verbinden eines Bündels von mit einer Isolierung versehenen Drähten, wobei die Isolierung zumindest teilweise mittels Ultraschalleinwirkung entfernt wird und wobei das Bündel vor der Ultraschalleinwirkung von einer Hülse aus metallischem Material aufgenommen wird. Auch nimmt die Erfindung Bezug auf eine Anordnung zum stoffschlüssigen Verbinden eines Bündels von isolierten Drähten mittels Ultraschall, wobei das Bündel in einem Verdichtungsraum einer Ultraschallschweißvorrichtung anordbar ist, der auf gegenüberliegenden Seiten von einer Ultraschallschwingungen abgebenden Sonotrode und einem Amboss und seitlich von Seitenbacken begrenzt ist.

Um Werkstoffe stoffschlüssig zu verbinden, kann das Ultraschallschweißen zur Anwendung gelangen. Dabei wird die zum Schweißen benötigte Energie in Form von mechanischen Schwingungen in das Schweißgut eingebracht. Hierzu wird eine Sonotrode in ihrer Längsrichtung in Ultraschallschwingung versetzt. Gleichzeitig erfolgt eine Relativbewegung zu einer der Sonotrode zugeordneten Gegenelektrode - auch Amboss genannt-, um eine erforderliche statische Schweißkraft aufzubringen. Zwischen Gegenelektrode und Sonotrode sind die zu fügenden Werkstoffe angeordnet.

Beim Ultraschallschweißen wird zwischen dem Kunststoff-Ultraschallschweißen und dem Metall-Ultraschallschweißen unterschieden. Beim Verschweißen von Kunststoff erfolgt die Erwärmung im Schweißbereich durch Absorption der mechanischen Schwingungen, durch die Reflexion der Schwingungen im Schweißbereich und durch Grenzflächenreibung in der Fügefläche. Die Schwingungen werden vertikal eingebracht, d. h., die Sonotrodenlängsachse verläuft senkrecht zu der von der Gegenelektrode aufgespannten Ebene, auf der die Fügepartner angeordnet sind. Typische Frequenzen beim Kunststoff-Ultraschallschweißen liegen zwischen 20 kHz und 70 kHz.

Im Gegensatz zum Kunststoffschweißen werden beim Metall-Ultraschallschweißen die mechanischen Schwingungen parallel zu der von dem Amboss aufgespannten Ebene eingebracht. Dabei kommt es zu einer komplexen Beziehung zwischen der zwischen Sonotrode und Gegenelektrode wirkenden statischen Kraft, den oszillierenden Scherkräften und einem Temperaturanstieg in der Fügezone. Typische Frequenzen beim Metall-Ultraschallschweißen liegen zwischen 20 kHz und 40 kHz, wobei üblicherweise die Arbeitsfrequenz im Bereich von 20 kHz liegt.

Sowohl beim Kunststoff-Ultraschallschweißen als auch beim Metall-Ultraschallschweißen liegt die Fügezone im Schwingungsbauch.

Der DE-B-102 29 565 ist ein Verfahren zum elektrisch leitenden Verbinden von lackierten Drähten zu entnehmen. Dabei werden die lackierten Drähte in ihren zu verbindenden Bereichen von einem elektrisch leitenden Material zumindest bereichsweise umschlossen, um anschließend durch Ultraschalleinwirkung die Drähte mit dem Material bei gleichzeitigem Aufbrechen des Isolierlacks kraftschlüssig zu verbinden.

Um Lackdrähte vor dem Verschweißen nicht abisolieren zu müssen, werden diese nach der DE-A-196 36 217 in einem von einer Sonotrode und einen von einem Amboss begrenzten Aufnahmeraum einer Ultraschallschweißvorrichtung eingebracht, wobei Sonotrode und/oder Amboss ein Profil aufweisen.

Eine Isolierung aufweisende Drähte werden nach der JP-A-22075481 von einer aus elektrisch leitendem Material bestehenden Hülse umgeben, die sodann mit den Drähten in einer Ultraschallschweißvorrichtung verbunden werden. Die Sonotrode weist eine im Schnitt W-förmige Geometrie und die Sonotrode in Bezug auf den Amboss einen konvexen Verlauf auf.

Der JP-A-4370669 ist ein Verfahren zum Verbinden elektrisch isolierter Leiter mit einem Kabelschuh zu entnehmen. Zur Abisolierung wirkt auf die Drähte Ultraschall ein. Gleichzeitig werden Crimpfahnen umgebogen, um die Drähte in dem Kabelschuh zu fixieren.

Um mit einer Isolierung umgebene elektrische Leiter mit einem Anschluss zu verbinden, werden erstere nebeneinander angeordnet, um sodann eine stoffschlüssige Verbindung mittels Ultraschall zu erzielen (US-A-6,009,366).

Um von einer Isolierung umgebene Drähte mit einem Anschluss zu verbinden, sieht die US-A-4,317,277 ein metallisches Element vor, das die Isolierung durchstoßende Vorsprünge aufweist und die Drähte umgibt.

Der WO-A-2008/148813 sind ein Verfahren zum elektrisch leitenden Verbinden von Litzen sowie eine Ultraschallschweißvorrichtung zu entnehmen.

Um problemlos aus Aluminium oder Aluminiumlegierung bestehende Litzen zu verschweißen, ist eine Sonotrode vorgesehen, deren Schweißfläche einen Verlauf eines offenen Trapezes aufweist.

Um das Anlegieren von aus Aluminium bestehenden Litzen beim Ultraschallschweißen zu vermeiden, sieht die WO-A-2009/060080 einen Verdichtungsraum vor, dessen statische Werkzeugteile mit einer Schicht aus polykristallinem Diamant versehen sind.

Der vorliegenden Erfindung liegt zum einen die Aufgabe zu Grunde, ein Verfahren und eine Anordnung der eingangs genannten Art so weiterzubilden, dass eine sichere stoffschlüssige Verbindung zwischen isolierten Drähten, insbesondere mit einem Isolierlack versehenen Drähten möglich ist. Gleichzeitig soll im Vergleich zu bekannten Verfahren eine Vereinfachung gegeben sein. Bei guter elektrisch leitender Verbindung soll eine hohe mechanische Festigkeit sichergestellt sein.

Zur Lösung der Aufgabe sieht die Erfindung im Wesentlichen vor, dass entweder in einem ersten Schritt die Isolierung der Drähte mittels Kunststoff-Ultraschallschweißens zumindest teilweise entfernt wird und in einem zweiten Schritt die Drähte mittels Metall-Ultraschallschweißens oder Widerstandsschweißens stoffschlüssig verbunden werden oder dass das Bündel der Drähte von der metallischen Umhüllung wie der Hülse aufgenommen wird und die metallische Umhüllung mit ihrer Längsachse quer zur Längsachse einer Ultraschallschwingungen übertragenden Sonotrode angeordnet wird und mittels des Ultraschallschweißens sowohl das teilweise Entfernen der Isolierung als auch das stoffschlüssige Verbinden der Drähte untereinander und mit der metallischen Umhüllung durchgeführt wird. Dabei wird gleichzeitig eine Vertiefung wie rinnenförmige Einkerbung quer zur Längsachse der metallischen Umhüllung wie Hülse ausgeformt. Erfolgt das Entisolieren vorzugsweise in einem dem stoffschlüssigen Verbinden in der Umhüllung vorausgehenden Verfahrens schritt, so kann überraschenderweise auch während des Schweißens in der Umhüllung ein zumindest teilweises Entfernen der Isolierung erfolgen.

Entsprechende mit Isolierlack versehene Drähte weisen üblicherweise Durchmesser von zumindest 0,3 mm auf, wobei bevorzugte Durchmesserbereiche zwischen 0,4 mm und 1,5 mm liegen, ohne dass hierdurch die erfindungsgemäße Lehre eingeschränkt werden soll. Bei den Drähten handelt es sich grundsätzlich um massive Kupfer- oder Aluminiumdrähte oder Drähte aus Kupfer- oder Aluminiumlegierungen. Eine Materialmischung, also Drähte aus voneinander abweichenden Materialien ist gleichfalls möglich. Dabei kann zur Erzielung einer hinreichenden Steifigkeit auch zusätzlich zumindest ein Stahldraht in dem Bündel von Drähten enthalten sein, ohne dass die Standzeiten der Sonotrode verkürzt werden; denn die metallische Umhüllung - wie geformtes Blechteil - verhindert einen unmittelbaren Kontakt zwischen Sonotrode und den Drähten.

Vorteile ergeben sich insbesondere auch beim Verschweißen von Aluminium-Drähten, auch großer Querschnitte; denn die Hülse bietet einen Schutz gegen ein Anhaften bzw, Anlegieren.

Auch verzinnte Drähte können problemlos verschweißt werden.

Ein Auf schälen der Adern der Drähte aufgrund der Hülse wird vermieden.

Ein Bündel von Drähten unterschiedlicher Querschnitte kann problemlos mittels Ultraschall verschweißt werden. Die ansonsten festzustellende Dämpfung beim Schweißen von Drähten unterschiedlicher Querschnitte aufgrund der metallischen Umhüllung tritt nicht auf.

Erfindungsgemäß wird bevorzugterweise ein zweistufiges Verfahren eingesetzt, mittels dessen zunächst die Isolierung, d. h. der Isolierlack gebrochen und verdrängt wird, um sodann in einem zweiten Verfahrensschritt die zumindest bereichsweise abisolierten Drähte stoffschlüssig miteinander zu verbinden. Dies erfolgt bevorzugterweise mittels Ultraschall, gleichwenn ein Verschweißen der zumindest bereichsweise abisolierten Drähte mittels Widerstandschweißens gleichfalls möglich ist.

Sofern das Abisolieren und das stoffschlüssige Verbinden nicht in zwei Verfahrensschritten erfolgt, sondern in einem einzigen Verfahrensschritt durchzuführen ist, sieht der alternative Vorschlag der Erfindung vor, dass das Bündel der Drähte in eine Hülse oder entsprechende Umhüllung eingebracht und diese in Bezug auf die die Ultraschallschwingungen übertragende Sonotrode einer Ultraschallschweißvorrichtung derart ausgerichtet wird, dass die Längsachse der Hülse bzw. Umhüllung quer zur Längsrichtung der Ultraschallschwingungen, also quer zur Längsachse der Sonotrode verläuft. Bei einer diesbezüglichen Anordnung hat sich überraschenderweise gezeigt, dass der Isolierlack ebenfalls im erforderlichen Umfang aufgebrochen und entfernt wird, um sodann ein stoffschlüssiges Verbinden zu ermöglichen. Gleichzeitig erfolgt ein Umformen der Hülse bzw. Umhüllung, die durch die über die Sonotrode einwirkende Kraft beim Ultraschallschweißen die Vertiefung wie Einkerbung quer zur Längsrichtung erfährt, wodurch zusätzlich die Verbindung zwischen Hülse und den abisolierten Drähten verstärkt wird.

Die Längsachse der Hülse bzw. Umhüllung - nachstehend aus Gründen der Vereinfachung grundsätzlich als Hülse bezeichnet - verläuft in Richtung der Drähte, also in Längsrichtung des zu verschweißenden Bündels aus Drähten.

Bevorzugterweise ist bei einem zweistufigen Verfahrensablauf vorgesehen, dass die Drähte nach dem Kunststoff-Ultraschallschweißen von einer Hülse umgeben und sodann zusammen mit der Hülse stoffschlüssig verbunden werden. Dabei kann die Längsachse der Hülse mit den Drähten in Längsrichtung der Ultraschallschwingungen ausgerichtet werden, wenn das Applizieren des Ultraschalls während des Metall-Ultraschallschweißens erfolgt.

Allerdings ist das Einbringen der durch das Kunststoff-Metallschweißen zu einem Knoten kompaktierten Drähte in eine Hülse nicht zwingend erforderlich.

Wird eine Hülse benutzt, so besteht des Weiteren die Möglichkeit, deren Längsachse quer zu den Ultraschallschwingungen anzuordnen, so dass sich in diesem Fall eine Einkerbung ergibt, wie dies zuvor erläutert worden ist.

Besonders gute Schweißergebnisse lassen sich dann erzielen, wenn die Drähte während des Kunststoffschweißens zu einer ersten Quaderform mit einer Höhe H1 in Längsrichtung der Ultraschallschwingungen und einer Breite B1 quer zu der Längsrichtung kompaktiert werden und sodann die Drähte während des Metall-Ultraschallschweißens zu einer zweiten Quaderform umgeformt werden mit einer Höhe H2 mit H2 < H1 und einer Breite B2 mit B2 > B1.

Die Drähte können des Weiteren während des Metall-Ultraschallschweißens mit einem Träger stoffschlüssig verbunden werden. Häufig ist es in diesem Fall nicht erforderlich, dass die zuvor abisolierten Drähte von einer Hülse umgeben sind.

Um beim Zuführen der Drähte in einen Verdichtungsraum einer Ultraschallschweißvorrichtung auszuschließen, dass die Drähte derart auseinandergespreizt sind, dass ein problemloses Einlegen nicht möglich ist, ist in Weiterbildung der Erfindung vorgesehen, dass die Drähte zumindest während des Zuführens zum Kunststoff-Ultraschallschweißen von einer Fixierhilfe aufgenommen oder von einer solchen umgeben werden. Dabei kann als Fixierhilfe eine Fixierhülse verwendet werden. Auch kann ein Werkzeug zum Einsatz gelangen, das allein beim Zuführen zu dem Verdichtungsraum das Bündel der Drähte umschließt.

Das zumindest teilweise Entfernen der Isolierung, insbesondere das Aufbrechen des Lacks kann in einer ersten Bearbeitungsstation durchgeführt werden, wohingegen das stoffschlüssige Verbinden in einer zweiten.

In hervorzuhebender Ausgestaltung der Erfindung ist jedoch vorgesehen, dass das Kunststoff-Ultraschallschweißen und das Metall-Ultraschallschweißen in derselben Bearbeitungsstation durchgeführt werden, wobei beim Kunststoff-Ultraschallschweißen die Sonotrode für das Metall-Ultraschallschweißen der Amboss beim Kunststoff-Ultraschallschweißen ist und beim Metall-Ultraschallschweißen die Sonotrode für das Kunststoff-Ultraschallschweißen der Amboss für das Metall-Ultraschallschweißen ist.

Beim Aufbrechen des Isolierlacks während der Ultraschalleinwirkung erfolgt ein teilweises Verdampfen des Isolierlackes und Verschmoren dieses. Um zu vermeiden, dass hierdurch die stoffschlüssige Verbindung während des Metall-Ultraschallschweißens beeinträchtigt wird, sieht die Erfindung vor, dass das Bündel der Drähte im Bereich der Drahtenden beim Kunststoff-Ultraschallschweißens beaufschlagt wird, wobei das Bündel zu einer Quaderform kompaktiert wird, um sodann nach dem Kunststoff-Ultraschallschweißen das freie Ende des kompaktierten Bündels abzutrennen wie abzuschneiden. Hierdurch werden zwischen den Drähten vorhandene Lackreste zusätzlich entfernt.

Auch zeichnet sich die Erfindung durch ein Verfahren zum elektrisch leitenden Verbinden eines Bündels von blanken Litzen oder Drähten mittels Ultraschalleinwirkung, wobei das Bündel vor der Ultraschalleinwirkung von einer metallischen Umhüllung wie Hülse aus metallischen Material aufgenommen wird, dadurch aus, dass das Bündel von der metallischen Umhüllung aufgenommen wird und die metallische Umhüllung mit ihrer Längsachse quer zur Längsachse einer Ultraschallschwingung übertragenen Sonotrode angeordnet wird und mittels Ultraschallschweißens stoffschlüssiges Verbinden der Drähte oder Litzen untereinander und mit der metallischen Umhüllung durchgeführt wird, wobei gleichzeitig quer zur Längsachse der metallischen Umhüllung in dieser eine Vertiefung eingeformt wird. Bei einem entsprechenden Verfahren können entsprechend die zuvor erläuterten Merkmale zur Anmeldung gelangen.

Ferner zeichnet sich eine Anordnung zum stoffschlüssigen Verbinden eines Bündels von isolierten Drähten, insbesondere von mit einem Isolierlack versehenen Drähten, mittels Ultraschall, wobei das Bündel in einem Verdichtungsraum einer Ultraschallschweißvorrichtung anordbar ist, der auf gegenüberliegenden Seiten von einer Ultraschallschwingungen erzeugenden Sonotrode und einem Amboss und seitlich von ggfs. verstellbaren Seitenbacken begrenzt ist, dadurch aus, dass die Anordnung eine erste und eine zweite Sonotrode aufweist, deren Längsachsen sich unter einem rechten Winkel schneiden, dass die Anordnung sowohl zum Metall-Ultraschallschweißen als auch zum Kunststoff Ultraschallschweißen geeignet ist und dass beim MetallUltraschallschweißen die zweite Sonotrode unerregt und Amboss für die erste Sonotrode und die erste Sonotrode erregbar ist und beim Kunststoff-Ultraschallschweißen die erste Sonotrode unerregt und Amboss für die zweite Sonotrode und die zweite Sonotrode erregbar ist. Mit der Anordnung können verfahrensmäßige Merkmale zuvor erfolgter Beschreibung angewendet werden.

Weitere Einzelheiten, Vorteile und Merkmale der Erfindung ergeben sich nicht nur aus den Ansprüchen, den diesen zu entnehmenden Merkmale - für sich und/oder in Kombination-, sondern auch aus der nachfolgenden Beschreibung von der Zeichnung zu entnehmenden bevorzugten Ausführungsbeispielen.

Es zeigen:
- Fig. 1: eine Prinzipdarstellung einer Ultraschallschweißanordnung,
- Fig. 2: einen Ausschnitt einer Kunststoff-Ultraschallschweißvorrichtung,
- Fig. 3: einen Ausschnitt einer Metall-Ultraschallschweißvorrichtung,
- Fig. 4: einen Ausschnitt einer Kunststoff-Metall-Ultraschallschweißvorrichtung,
- Fig. 5a, 5b: einen erfindungsgemäßen Verfahrensablauf und
- Fig. 5c: eine Variante der Fig. 5a und 5b.

In den Figuren, in denen grundsätzlich für gleiche Elemente gleiche Bezugszeichen verwendet werden, sind bevorzugte Ausführungsbeispiele bzw. Anwendungsfälle eines erfindungsgemäßen Verfahrens zum stoffschlüssigen Verbinden von mit einer Isolierung versehenen Drähten dargestellt, wobei es sich bei den Drähten 10 vorzugsweise um lackierte Drähte handelt. Die zu verschweißenden Drähte sind zuvor zu einem Bündel zusammengefasst. Um ein Auseinanderspreizen zu vermeiden, kann das Bündel 12 von einer Fixierhilfe in Form eines Ringes 14 oder Hülse umgeben sein, wie rein prinzipiell aus den Figuren ersichtlich ist.

Um das Bündel 12 der isolierten Drähte 10, die Durchmesser zwischen 0,3 mm und 1,5 mm aufweisen können und somit hinreichend steif sind, zu kompaktieren und elektrisch leitend zu verbinden, gelangt das Kunststoff-Ultraschallschweißen in Kombination mit dem Metall-Ultraschallschweißen zur Anwendung, wobei letzteres ggfs, durch Widerstandsschweißen ersetzt werden kann.

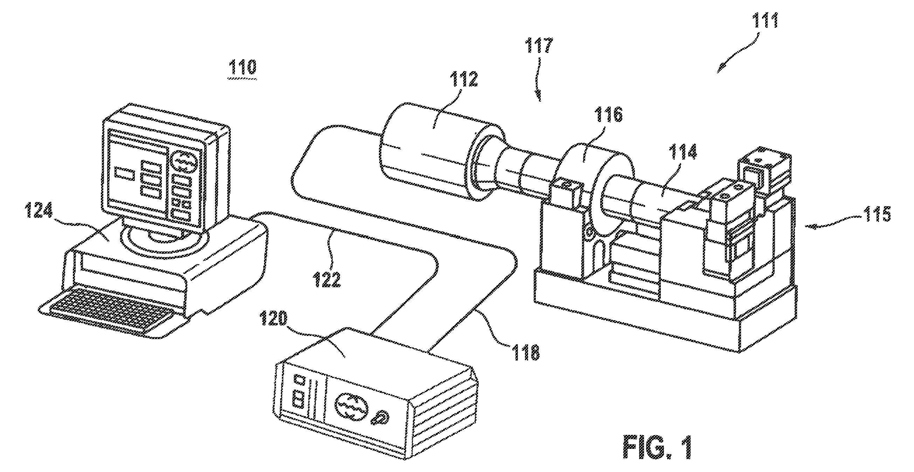

In Fig. 1 ist rein prinzipiell eine Ultraschallschweißanordnung dargestellt, um die wesentlichen Elemente zu erläutern. Dabei wird die Anordnung 110 anhand einer Ultraschallschweißvorrichtung 111 erläutert, die zum Verschweißen von Metallen bestimmt ist.

Die Ultraschallschweißanordnung 110 umfasst als wesentliche Elemente einen Konverter 112 und eine Sonotrode 114, zwischen denen ein Booster 116 zur Amplitudenverstärkung angeordnet ist. Konverter 112, Booster 116 und Sonotrode 114 bilden einen sogenannten Ultraschallschwinger 117, der im Booster 116 gelagert ist. Der Sonotrode 114, d. h. deren in Fig. 1 nicht erkennbarer Kopf, ist eine Gegenelektrode 115 zugeordnet, zu der der Schwinger 117 absenkbar ist, um Kräfte beim Schweißen auf die Fügepartner einzuleiten. Ferner sind Seitenschieber vorhanden, um einen von Sonotrode 114, Gegenelektrode oder Amboss 115 und den Seitenschiebern umgebenen Verdichtungsraum in gewünschtem Umfang in Höhe und Breite verstellen zu können. Die Gegenelektrode 115 ist insbesondere mehrteilig ausgebildet, wie dies z. B. in der US-A-4,596,352 beschrieben ist.

Der Konverter 112 ist über eine Leitung 118 mit einem Generator 120 verbunden, der seinerseits über eine Leitung 122 an einen Rechner 124 angeschlossen ist. Über den Generator 120 wird der Konverter 112, d. h, die in diesem angeordneten Piezokristallscheiben mit Hochfrequenzspannung beaufschlagt, um die Scheiben entsprechend zu dehnen bzw. zu kontrahieren, wodurch Ultraschallschwingungen mit einer Amplitude erzeugt werden, die vom Booster 116 verstärkt auf die Sonotrode 114 übertragen werden.

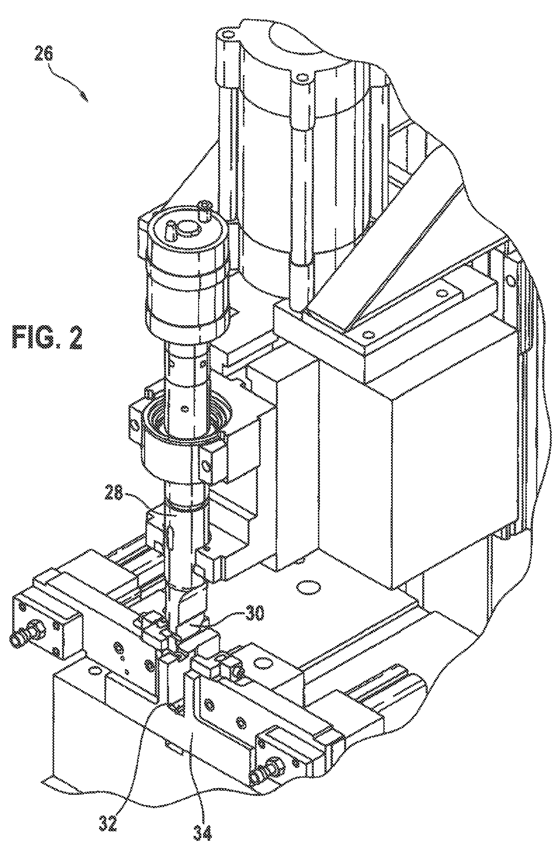

Erfindungsgemäß wird die Lackisolierung der zu einem Bündel 12 zusammengefassten Drähte 10 mittels Ultraschall aufgebrochen und verdrängt. Die steifen Drähte 10 bilden bei der Ultraschall- und Krafteinleitung den erforderlichen Widerstand, damit der Lack abplatzen kann. Gleichzeitig erfolgt ein Kompaktieren. Dies erfolgt in einer Kunststoff-Ultraschallschweißvorrichtung 26, wie diese rein prinzipiell der Fig. 2 zu entnehmen ist.

Sofern die Drähte 10 nicht steif genug sein sollten, kann in das Bündel ein Stahldraht eingebracht werden, wodurch die gewünschte bzw. erforderliche Steifigkeit erzielbar ist, um beim Applizieren von Ultraschall die Isolierung bzw. den Lack zu entfernen bzw. abplatzen zu lassen.

Ein entsprechender Stahldraht führt nicht dazu, dass die Sonotrode einem erhöhten Verschleiß ausgesetzt wird, sofern das Bündel - wie nachstehend erläutert - vor dem Verschweißen von einer metallischen Umhüllung bzw. Hülse aufgenommen wird, die mit dem Bündel verschweißt wird.

Wesentlicher Bestandteil der entsprechenden Vorrichtung 26 ist eine Sonotrode 28, die im Schwingungsknoten gelagert ist. Die Sonotrode 28, die im Ausführungsbeispiel ein λ/2- Schwinger ist, weist einen Sonotrodenkopf 30 mit einer Stirnfläche auf, die parallel zur Abstützfläche 32 einer Gegenelektrode 34 verläuft, auf die das Bündel 12 positioniert wird. Die Sonotrode 28 wird in Richtung ihrer Längsachse in Schwingung erregt, so dass durch die Anordnung der Sonotrode 28 und dessen von der Stirnfläche des Sonotrodenkopfs 30 gebildeten Schweißfläche zu der gleichfalls als Schweißfläche dienenden Abstützfläche 32 des Amboss 34 die Ultraschallschwingungen senkrecht in die Drähte 10 des Bündels 12 eingebracht werden, wenn auf der Schweißfläche 32 des Amboss 34 ein entsprechendes Bündel 12 angeordnet ist. Längsachse der Drähte 10 bzw. des Bündels 12 innerhalb des Verdichtungsraums verläuft folglich senkrecht zur Längsachse der Sonotrode 28. Zum Einleiten der Ultraschallschwingungen wird die Sonotrode 28 entsprechend in Richtung eines nicht dargestellten Bündels 12 abgesenkt. Der einerseits von der Stirnfläche des Sonotrodenkopfs 30 und andererseits von der Schweißfläche 32 des Amboss 34 begrenzte Verdichtungsraum kann seitlich von nicht näher gekennzeichneten Schiebern verschlossen werden, um die Breite einstellen zu können.

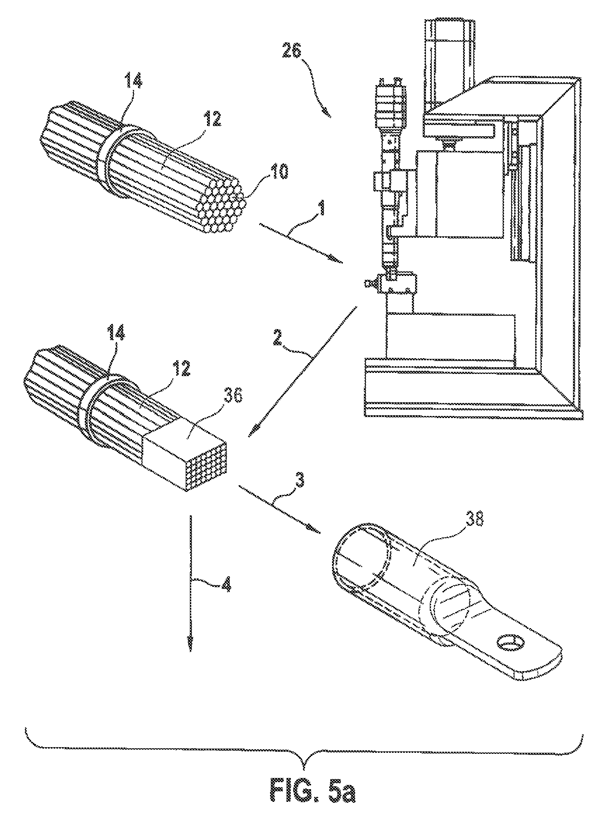

Der entsprechende Verfahrensschritt ist auch der Fig. 5a zu entnehmen und mit 1 gekennzeichnet. So wird das Bündel 12 der Drähte 10, die von der Fixierhülse 14 umgeben sind, in einen entsprechenden Verdichtungsraum einer Ultraschallschweißvorrichtung eingebracht, die der Fig. 2 entspricht. Durch das Applizieren des Ultraschalls erfolgt ein Aufbrechen und Verdrängen des Lacks bei gleichzeitigem Kompaktieren des Bündels 12 innerhalb des Verdichtungs- bzw. Schweißraums, so dass sich entsprechend der Umfangsgeometrie des Verdichtungsraums eine Quadergeometrie am kompaktierten Endbereich 36 des Bündels 12 ergibt.

Durch die Ultraschallwirkung wird erwähntermaßen gleichzeitig der Isolierlack der Drähte 10 aufgebrochen und verdrängt. Auch erfolgt ein teilweises Verdampfen. Sofern im Endbereich zu viel verbrannter Lack vorliegen könnte, der bei den nachfolgenden Verfahrens schritten hinderlich ist, sollte das freie Ende des quaderförmig umgeformten Endbereichs 36 abgetrennt werden.

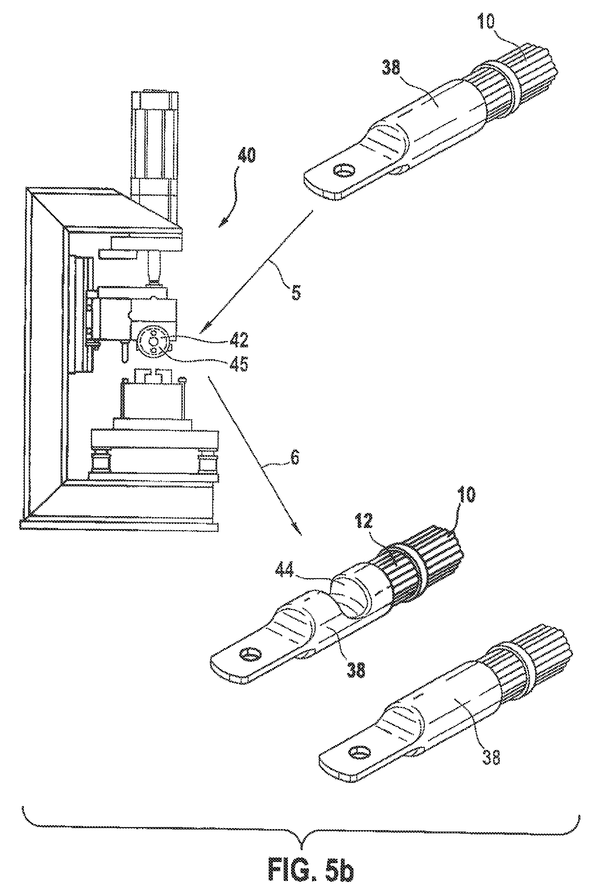

Nachdem das dem Kunststoff-Ultraschallschweißen ausgesetzte Bündel 12 aus dem Verdichtungsraum entfernt ist (Schritt 2 in Fig. 5a), wird im Ausführungsbeispiel auf den quaderförmigen Endabschnitt 36 des Bündels 12 eine Anschlusshülse oder ein sogenannter Ringkabelschuh 38 geschoben (Verfahrensschritt 3). Die diesbezügliche Einheit wird sodann in einen Verdichtungsraum einer Metall-Ultraschallschweißvorrichtung 40 eingelegt, um das stoffschlüssige Verbinden zwischen dem Ringkabelschuh 30 oder einem anderen Element wie Hülse oder Blech und dem zumindest teilweise vorhandenen lackisolierten befreiten Drahtbündel 12 vorzunehmen. Dabei besteht die Möglichkeit, in den Verdichtungsraum der Metall-Ultraschallschweißvorrichtung 40 die Anschlussöse in Längsrichtung der Sonotrode 42 (senkrecht zur Zeichenebene) oder - wie rein prinzipiell aus der Fig. 5b ersichtlich ist -, quer zu dieser, also in Richtung des Pfeils 5 einzulegen. In diesem Fall erstreckt sich die Längsachse des Ringkabelschuhs 38 senkrecht zur Längsachse der Sonotrode mit der Folge, so dass bei Krafteinwirkung und Ultraschallübertragung entsprechend der Geometrie der Sonotrode im Schwingungsbauch, in dem die Sonotrode auf den Ringkabelschuh 38 einwirkt, eine Einkerbung 44 ausgebildet wird (s. Entnahmeschnitt 6 in Fig. 5b). Hierdurch wird zusätzlich ein Form- und Kraftschluss zwischen dem Ringkabelschuh 38 und dem Bündel 12 verstärkt.

Anstelle des Ringkabelschuhs 38 kann das Bündel 12 auch von einer metallischen Umhüllung geeigneter Geometrie aufgenommen sein.

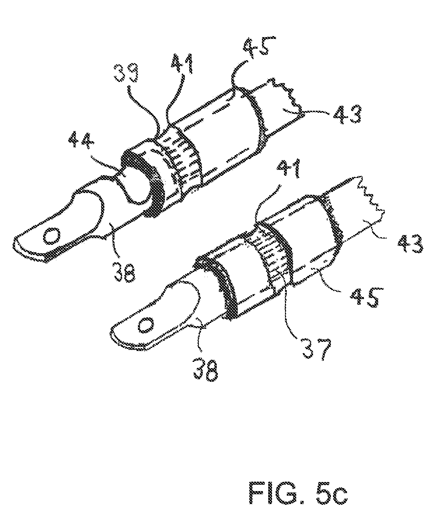

Im Ausführungsbeispiel der Fig. 5 wird als Sonotrode 42 eine λ-Sonotrode benutzt, die an einem Ende gelagert und im Abstand λ/2 vom Stirnende 44 auf den Ringkabelschuh 38 einwirkt.

Wird der Ringkabelschuh 38 parallel zur Längsachse einer Sonotrode beim MetallUltraschallschweißen positioniert, so erfolgt ein Umformen in Längsrichtung des Ringkabelschuhs 38, wie durch die untere Darstellung rechts in Fig. 5b rein prinzipiell verdeutlicht werden soll.

Mit anderen Worten sind die stoffschlüssig mit dem Ringkabelschuh 38 verbundenen und zuvor teilweise abisolierten Drähte 10 in der unteren Darstellung links in Fig. 5b bei Ausrichtung des Ringskabelschuhs 38 quer zur Sonotrodenlängsachse und in der unteren Darstellung rechts parallel zur Sonotrodenlängsachse in dem nicht näher bezeichneten Verdichtungsraum positioniert worden.

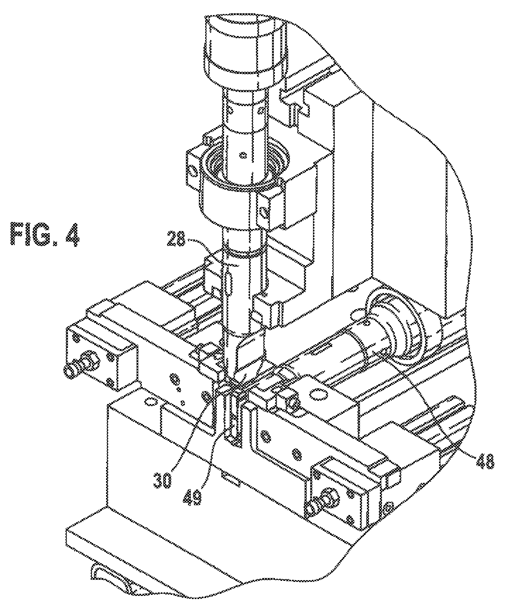

Die Maßnahmen und Verfahrensschritte, die im Zusammenhang mit der Fig. 4 und 5 zum stoffschlüssigen Verbinden isolierender Drähte untereinander und mit dem Ringkabelschuh erläutert worden sind, gelten entsprechend für ein stoffschlüssiges Verbinden von blanken Litzen bzw. Drähten untereinander und mit einem entsprechenden Ringkabelschuh 38 oder einer sonstigen metallischen Umhüllung geeigneter Geometrie, in der nach dem Ultraschallschweißen in den Ringkabelschuh 38 bzw. der Umhüllung ein quer zu dessen bzw. deren Längsrichtung verlaufende Einkerbung eingeformt ist, die der Einkerbung 44 gemäß Fig. 5b entspricht.

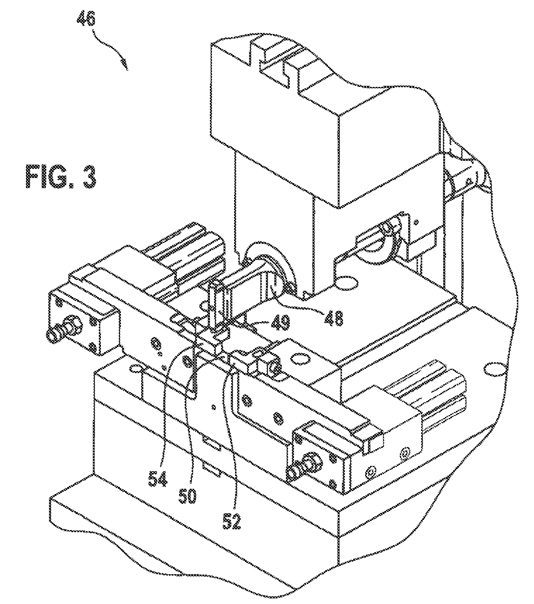

In Fig. 3 ist ein Ausschnitt einer Ultraschallschweißvorrichtung 46 dargestellt, mit der bereichsweise abisolierte Drähte 10 stoffschlüssig miteinander verbunden werden. Im Ausführungsbeispiel werden die Drähte 10 parallel zur Längsachse einer Sonotrode 48 ausgerichtet. Dabei ist es nicht erforderlich, dass die Drähte 10 nach dem Abisolieren von einer Hülse aufgenommen werden. Vielmehr können die Drähte 10 z. B. mit einem Blech verschweißt werden, das auf einem Amboss 50 der Ultraschallschweißvorrichtung 46 positioniert wird. Man erkennt des Weiteren Seitenschieber 52, 54, die den Verdichtungsraum seitlich begrenzen.

Auch besteht die Möglichkeit, dass das zunächst teilweise abisolierte Bündel 12 der Drähte 10 zu einem Knoten verdichtet und verschweißt wird, ohne dass eine Verbindung mit einem weiteren metallischen Element erfolgt.

Entsprechend der erfindungsgemäßen Lehre kann das Abisolieren der Drähte 10 in einer ersten Arbeitsstation - wie der der Fig. 2 - und das weitere Kompaktieren und stoffschlüssige Verbinden untereinander und z. B. mit einem Träger oder einer Hülse in einer zweiten Arbeitsstation entsprechend der Fig. 3 durchgeführt werden.

Aus dem Ausführungsbeispiel der Fig. 4 ergibt sich eine weitere Alternative, nach der sowohl das zumindest teilweise Abisolieren der Drähte 10 und deren stoffschlüssiges Verbinden in einer einzigen Arbeitsstation erfolgen. Diese weist hierzu zwei Sonotroden 28, 48 entsprechend der Fig. 2 und 3 auf. Dabei sind die Sonotroden 28, 48 mit ihren Köpfen 30. 49 derart zueinander ausgerichtet, dass diese eine Doppelfunktion ausüben, nämlich zum einen zur Übertragung der erforderlichen Ultraschallschwingungen dienen und zum anderen die Funktion eines Amboss ausüben.

Soll in dem von den Sonotrodenköpfen 30, 49, begrenzten Verdichtungsraum gemäß Fig. 4 ein Abisolieren der Drähte 10 erfolgen, so dient der Sonotrodenkopf 49 der Sonotrode 48 als Amboss. Die Sonotrode 28 gibt sodann die Ultraschallschwingungen zum Aufbrechen des Lackes bzw. der Isolierung ab. Es wird folglich ein Kunststoff-Schweißprozess durchgeführt.

Soll anschließend ein stoffschlüssiges Verbinden nach ggfs. Aufschieben einer Hülse auf das Bündel 12 der Drähte 10 erfolgen, so dient der Sonotrodenkopf 30 der Sonotrode 28 als Gegenelektrode oder Amboss, wohingegen die Sonotrode 48 in Ultraschallschwingung erregt wird und diese an die zu fügenden Werkstoffe überträgt. Es erfolgt ein Metall-Schweißprozess.

Erfolgt zunächst ein Abisolieren der Drähte 10 und sodann ein Verschweißen mit der Hülse wie Ringskabelschuh 38 oder einer sonstigen z. B. durch ein geformtes Blech gebildeten Umhüllung, so sind üblicherweise die Drähte 10 außerhalb der Hülse über einen Abschnitt von einigen Millimetern abisoliert. Dieser Bereich 37 wird von zwei ringförmigen Begrenzungen - einerseits der Öffnung 39 der Hülse 38 und andererseits den Rand 43 der Isolierung der Drähte 10 - begrenzt. Dieser Bereich 37 kann problemlos mit einem Schrumpfschlauch 45 zur Isolierung der Drähte 10 umschlossen werden (Fig. 5c).

Zu den zu verschweißenden Drähten 10 ist anzumerken, dass diese nicht aus dem gleichen Material bestehen und auch nicht den gleichen Querschnitt aufweisen müssen.

Vielmehr kann ein Materialgemisch verschweißt werden. Auch Drähte 10 unterschiedlicher Querschnitte können verschweißt werden.

Auch gelten die erfindungsgemäßen Lehren für blanke Drähte bzw. Litzen, die in und mit einer Umhüllenden stoffschlüssig verbunden werden.

Das Verschweißen von blanken Litzen bzw. Drähten in der metallischen Umhüllung wird folglich gleichfalls von der erfindungsgemäßen Lehre erfasst, wobei die Umhüllung beim Verschweißen mit ihrer Längsachse quer zur Längsachse einer Sonotrode angeordnet wird, um quer zur Längsachse der Umhüllung in dieser eine Vertiefung einzuformen.

Ist in den Ausführungsbeispielen die erfindungsgemäße Lehre anhand von lackisolierten also eine harte Isolierung aufweisenden Drähten erläutert worden, so ist eine Anwendung auch für sonstige mit einer weichen Isolierung versehenen Drähte möglich.

## Patentansprüche

1. Verfahren zum elektrisch leitenden Verbinden eines Bündels (12) von mit einer Isolierung versehenen Drähten (10), wobei die Isolierung zumindest teilweise mittels Ultraschalleinwirkung entfernt wird und wobei das Bündel vor der Ultraschalleinwirkung von einer metallischen Umhüllung (38) wie Hülse aus metallischem Material aufgenommen wird,
wobei das Bündel (12) der Drähte (10) von der metallischen Umhüllung (38) aufgenommen wird und die metallische Umhüllung mit ihrer Längsachse quer zur Längsachse einer Ultraschallschwingungen übertragenden Sonotrode (42) angeordnet wird und mittels Ultraschallschweißens stoffschlüssiges Verbinden der Drähte untereinander und mit der metallischen Umhüllung durchgeführt wird, wobei gleichzeitig quer zur Längsachse der metallischen Umhüllung in diese eine Vertiefung (44) eingeformt wird, wobei zumindest ein teilweises Entfernen der Isolierung entweder während des Ultraschallschweißens bei dem von der metallischen Umhüllung aufgenommenen Bündel oder vor dem Einbringen in die metallische Umhüllung in einem vorausgehenden Verfahrensschritt mittels Kunststoff-Ultraschallschweißens erfolgt, oder
wobei in einem ersten Schritt die Isolierung der Drähte mittels Kunststoff-Ultraschallschweißens zumindest teilweise entfernt wird und in einem zweiten Schritt die Drähte mittels Metall-Ultraschallschweißens oder Widerstandsschweißens stoffschlüssig verbunden werden.

2. Verfahren nach Anspruch 1,
**dadurch gekennzeichnet,**
**dass** mit einem Isolierlack versehene Drähte (10) stoffschlüssig verbunden werden, wobei die Drähte einen Durchmesser D mit D ≥ 0,3 mm, insbesondere 0,4 mm ≤ D ≤ 1,5 mm aufweisen.

3. Verfahren nach Anspruch 1 oder 2,
**dadurch gekennzeichnet,**
**dass** die Drähte (10) nach dem Kunststoff-Ultraschallschweißen von der metallischen Umhüllung (38) umgeben und sodann zusammen mit der metallischen Umhüllung stoffschlüssig verbunden werden.

4. Verfahren nach zumindest einem der vorhergehenden Ansprüche,
**dadurch gekennzeichnet,**
**dass** die Drähte (10), die ggfs. von einer metallischen Umhüllung (38) beim Metall-Ultraschallschweißen umgeben sind, in Längsrichtung der Ultraschallschwingungen angeordnet werden.

5. Verfahren nach zumindest einem der vorhergehenden Ansprüche,
**dadurch gekennzeichnet,**
**dass** die metallische Umhüllung (38) mit den Drähten beim Ultraschallschweißen quer zur Ultraschallschwingungsrichtung angeordnet wird.

6. Verfahren nach zumindest einem der vorhergehenden Ansprüche,
**dadurch gekennzeichnet,**
**dass** das Bündel (12) im Bereich der Drahtenden während des Kunststoff-Ultraschallschweißens mit Ultraschall beaufschlagt wird, dass während des Kunststoff-Ultraschallschweißens das Bündel zu einer Quaderform (36) kompaktiert wird und dass nach dem Kunststoff-Ultraschallschweißen das freie Ende des kompaktieren Bündels abgetrennt wird.

7. Verfahren nach zumindest einem der vorhergehenden Ansprüche,
**dadurch gekennzeichnet,**
**dass** die Drähte (10) während des Kunststoff-Ultraschallschweißens zu einer ersten Quaderform mit einer Höhe H1 in Längsrichtung der Ultraschallschwingungen und einer Breite B1 quer zu der Längsrichtung kompaktiert werden und dass die Drähte während des Metall-Ultraschallschweißens zu einer zweiten Quaderform umgeformt werden mit einer Höhe H2 mit H2 < H1 und einer Breite B2 mit B2 > B1.

8. Verfahren nach zumindest einem der vorhergehenden Ansprüche,
**dadurch gekennzeichnet,**
**dass** das Bündel (12) der Drähte (10) von einer metallischen Umhüllung (38) umgeben wird, die während des Kunststoff-Ultraschallschweißens zwischen Sonotrode und Amboss einer Ultraschallschweißvorrichtung angeordnet wird.

9. Verfahren nach zumindest einem der vorhergehenden Ansprüche,
**dadurch gekennzeichnet,**
**dass** die Drähte (10) beim Metall-Ultraschallschweißen mit einem Träger stoffschlüssig verbunden werden.

10. Verfahren nach zumindest einem der vorhergehenden Ansprüche,
**dadurch gekennzeichnet,**
**dass** die Drähte (10) zumindest während des Zuführens zum Kunststoff-Ultraschallschweißen von einer Fixierhilfe (14) aufgenommen oder von einer solchen umgeben werden.

11. Verfahren nach zumindest einem der vorhergehenden Ansprüche,
**dadurch gekennzeichnet,**
**dass** als Fixierhilfe eine Fixierhülse oder ein Fixierring (14) verwendet wird.

12. Verfahren nach zumindest einem der vorhergehenden Ansprüche,
**dadurch gekennzeichnet,**
**dass** das Kunststoff-Ultraschallschweißen in einer ersten Bearbeitungsstation (26) und das Metall-Ultraschallschweißen in einer zweiten Bearbeitungsstation (40) durchgeführt werden.

13. Verfahren nach zumindest einem der vorhergehenden Ansprüche, wobei sowohl beim Kunststoff-Ultraschallschweißen als auch beim Metall-Ultraschallschweißen das Bündel (12) der Drähte (10) zwischen einem Amboss und einer Ultraschall abgebenden Sonotrode (28, 40) angeordnet wird,
**dadurch gekennzeichnet,**
**dass** das Kunststoff-Ultraschallschweißen und das Metall-Ultraschallschweißen in derselben Bearbeitungsstation durchgeführt werden, wobei beim Kunststoff-Ultraschallschweißen die Sonotrode (48) für das Metall-Utraschallschweißen der Amboss und beim Metall-Ultraschallschweißen die Sonotrode (28) für das Kunststoff-Ultraschallschweißen der Amboss ist.

14. Verfahren nach zumindest einem der vorhergehenden Ansprüche,
**dadurch gekennzeichnet,**
**dass** zwischen der metallischen Umhüllung (38) und Isolierung der das Bündel (12) bildenden Drähte (10) verlaufender abisolierter Bereich von einer Isolierung wie Schrumpfschlauch (45) umschlossen wird.

15. Anordnung zum stoffschlüssigen Verbinden eines Bündels (12) von isolierten Drähten (10) mittels Ultraschall mit einem Verdichtungsraum einer Ultraschallschweißvorrichtung (26) zur Aufnahme des Bündels, wobei der Verichtungsraum auf gegenüberliegenden Seiten von einer Ultraschallschwingungen erzeugenden Sonotrode (28, 48) und einem Amboss (34, 50) und seitlich von Seitenbacken (52, 54) begrenzt ist,
**dadurch gekennzeichnet,**
**dass** die Anordnung eine erste und eine zweite Sonotrode (28, 48) aufweist, deren Längsachsen sich unter einem rechten Winkel schneiden, dass die Anordnung sowohl zum Metall-Ultraschallschweißen als auch zum Kunststoff-Ultraschallschweißen geeignet ist und dass beim Metall-Ultraschallschweißen die zweite Sonotrode (28) unerregt und Amboss für die erste Sonotrode (48) und die erste Sonotrode erregbar ist und beim Kunststoff-Ultraschallschweißen die erste Sonotrode unerregt und Amboss für die zweite Sonotrode und die zweite Sonotrode erregbar ist.

## Claims

1. Method for electrically conducting bonding of a bundle (12) of wires (10) provided with insulation, especially an insulating paint, wherein the insulation is at least partially removed by ultrasonic treatment and wherein if necessary before the ultrasonic treatment the bundle is assimilated by a metallic sheathing (38) like a sleeve of metallic material,
**characterized in that**
the bundle (12) of wires (10) is assimilated by the metallic sheathing (38) and the metallic sheathing is situated with its longitudinal axis transverse to the longitudinal axis of a sonotrode (42) transmitting ultrasonic oscillations and the wires are joined with each other and with the metallic sheathing in firm bonding by ultrasonic welding, wherein simultaneously, transverse to the longitudinal axis of the metallic sheathing, into it a recess (44) is shaped, wherein the insulation is at least partially removed either during the ultrasonic welding with the bundle assimilated by the metallic sheathing, or before insertion into the metallic sheathing in a previous procedural step by means of plastic ultrasonic welding, or
that in a first step the insulation of the wires is at least partially removed by means of plastic ultrasonic welding, and in a second step the wires are firmly bonded by means of metallic ultrasonic welding or resistance welding.

2. Method according to claim 1,
**characterized in that**
wires (10) equipped with an insulating paint are firmly bonded, with the wires having a diameter D with D ≥ 0.3 mm, especially 0.4 mm ≤ D ≤ 1.5 mm.

3. Method according to claim 1 or 2,
**characterized in that**
after the plastic ultrasonic welding, the wires (10) are surrounded by the metallic sheathing (38) and then firmly bonded with the metallic sheathing.

4. Method according to at least one of the preceding claims,
**characterized in that**
the wires (10) that are surrounded by a metallic sheathing (38) during metallic ultrasonic welding, are arranged in the longitudinal direction of the ultrasonic oscillations.

5. Method according to at least one of the preceding claims,
**characterized in that**
the metallic sheathing (38) with the wires is arranged transverse to the direction of ultrasonic oscillations during ultrasonic welding.

6. Method according to at least one of the preceding claims,
**characterized in that**
in the area of the wire ends, the bundle (12) is irradiated with ultrasound during the plastic ultrasonic welding, that during the plastic ultrasonic welding the bundle is compacted into a cuboid form (36) and that after the plastic ultrasonic welding the free end of the compacted bundle is cut off.

7. Method according to at least one of the preceding claims,
**characterized in that**
during the plastic ultrasonic welding the wires (10) are compacted into a first cuboid form with a height H1 in the longitudinal direction of the ultrasonic oscillations and a width B1 transverse to the longitudinal direction, and that during the metallic ultrasonic welding, the wires are reshaped into a second cuboid form with a height H2 with H2 < H1 and a width B2 with B2 > B1.

8. Method according at least one of the preceding claims,
**characterized in that**
the bundle (12) of wires (10) is surrounded by a metallic sheathing (38), which is placed between the sonotrode and anvil of an ultrasonic welding device during the plastic ultrasonic welding.

9. Method according to at least one of the preceding claims,
**characterized in that**
the wires (10) are firmly bonded with a carrier during the metallic ultrasonic welding.

10. Method according to at least one of the preceding claims,
**characterized in that**
at least during being fed for plastic ultrasonic welding, the wires (10) are assimilated or surrounded by a fixing aid (14).

11. Method according to at least one of the preceding claims,
**characterized in that**
a fixing sleeve or a fixing ring (14) is used as the fixing aid.

12. Method according at least one of the preceding claims,
**characterized in that**
the plastic ultrasonic welding is conducted in a first processing station (26) and the metallic ultrasonic welding in a second processing station (40).

13. Method according at least one of the preceding claims, wherein both with the plastic ultrasonic welding and with the metallic ultrasonic welding, the bundle (12) of wires (10) is placed between an anvil and a sonotrode (28, 40) emitting ultrasound,
**characterized in that**
the plastic ultrasonic welding and the metallic ultrasonic welding are carried out in the same processing station, wherein with plastic ultrasonic welding the sonotrode (48) is the anvil for the metallic ultrasonic welding, and with metallic ultrasonic welding, the sonotrode (28) is the anvil for the plastic ultrasonic welding.

14. Method according to at least one of the preceding claims,
**characterized in that**
a stripped area running between the metallic sheathing (38) and insulation of the wires (10) that form the bundle (12) is surrounded by an insulation like shrinkdown tubing (45).

15. Arrangement for firm bonding of a bundle (12) of insulated wires (10), by means of ultrasound, with a compression space of an ultrasonic welding device (26) to assimilate the bundle, wherein the compression space is limited by the oppositely placed sides of a sonotrode (28, 48) generating ultrasonic oscillations and an anvil (34, 50) and laterally by adjustable side jaws (52, 54),
**characterized in that**
the arrangement has a first and a second sonotrode (28, 48), the longitudinal axes of which intersect at a right angle, that the arrangement is suitable both for metallic ultrasonic welding and for plastic ultrasonic welding, and that with metallic ultrasonic welding, the second sonotrode (28) is unexcited and the anvil for the first sonotrode (48) and the first sonotrode is excitable and with plastic ultrasonic welding, the first sonotrode is unexcited and the anvil for the second sonotrode and the second sonotrode is excitable.

## Revendications

1. Procédé permettant l'assemblage électroconducteur d'un faisceau (12) de fils (10) munis d'une isolation, sachant que l'isolation est retirée au moins partiellement par effet ultrasonore et qu'avant l'effet ultrasonore, le faisceau est logé dans une gaine (38) métallique telle qu'une douille en matériau métallique,
sachant que le faisceau (12) de fils (10) est logé dans la gaine (38) métallique et qu'avec son axe longitudinal, la gaine métallique est disposée transversalement à l'axe longitudinal d'une sonotrode (42) transmettant des vibrations ultrasonores, et qu'au moyen de soudage par ultrasons est effectué l'assemblage par liaison de matière des fils entre eux et avec ladite gaine métallique, sachant que dans le même temps est formé dans la gaine métallique un évidement (44) transversalement à l'axe longitudinal de ladite gaine, sachant qu'un enlèvement au moins partiel de l'isolation a lieu soit pendant le soudage par ultrasons sur le faisceau logé dans la gaine métallique, soit avant l'introduction dans la gaine métallique dans une étape précédente du procédé au moyen de soudage de plastique par ultrasons, ou
sachant que dans une première étape, l'isolation des fils est retirée au moins partiellement au moyen de soudage de plastique par ultrasons et que dans une deuxième étape, les fils sont assemblés par liaison de matière au moyen de soudage de métal par ultrasons ou de soudage par résistance.

2. Procédé selon la revendication 1,
**caractérisé en ce**
**que** les fils (10) munis d'un vernis isolant sont assemblés par liaison de matière, les fils présentant un diamètre D tel que D ≥ 0,3 mm, en particulier 0,4 mm ≤ D ≤ 1,5 mm.

3. Procédé selon la revendication 1 ou 2,
**caractérisé en ce**
**qu'**après le soudage de plastique par ultrasons, les fils (10) sont entourés par la gaine (38) métallique puis reliés par liaison de matière à la gaine métallique.

4. Procédé selon au moins une des revendications précédentes,
**caractérisé en ce**
**que** les fils (10) entourés d'une gaine (38) métallique lors du soudage de métal par ultrasons sont disposés dans le sens longitudinal des vibrations ultrasonores.

5. Procédé selon au moins une des revendications précédentes,
**caractérisé en ce**
**que** la gaine (38) métallique avec les fils est disposée transversalement à la direction des vibrations ultrasonores lors du soudage par ultrasons.

6. Procédé selon au moins une des revendications précédentes,
**caractérisé en ce**
**que** le faisceau (12) est exposé aux ultrasons dans la zone des extrémités des fils pendant le soudage de plastique par ultrasons, que le faisceau est compacté en une forme parallélépipédique (36) pendant le soudage de plastique par ultrasons, et qu'après le soudage de plastique par ultrasons, l'extrémité libre du faisceau compacté est sectionnée.

7. Procédé selon au moins une des revendications précédentes,
**caractérisé en ce**
**que** pendant le soudage de plastique par ultrasons, les fils (10) sont compactés en une première forme parallélépipédique présentant une hauteur H1 dans le sens longitudinal des vibrations ultrasoniques et une largeur B1 transversalement au sens longitudinal, et que pendant le soudage de métal par ultrasons, les fils sont refaçonnés en une deuxième forme parallélépipédique présentant une hauteur H2 telle que H2 < H1 et une largeur B2 telle que B2 >B 1.

8. Procédé selon au moins une des revendications précédentes,
**caractérisé en ce**
**que** le faisceau (12) de fils (10) est entouré d'une gaine (38) métallique qui est placée entre la sonotrode et l'enclume d'une soudeuse à ultrasons pendant le soudage de plastique par ultrasons.

9. Procédé selon au moins une des revendications précédentes,
**caractérisé en ce**
**que** les fils (10) sont reliés par liaison de matière à un support lors du soudage de métal par ultrasons.

10. Procédé selon au moins une des revendications précédentes,
**caractérisé en ce**
**que** les fils (10) sont maintenus au moins pendant l'amenée au poste de soudage de plastique par ultrasons par un moyen de fixation (14) ou entourés d'un tel moyen.

11. Procédé selon au moins une des revendications précédentes,
**caractérisé en ce**
**qu'**une douille de fixation ou une bague de fixation (14) est utilisée en tant que moyen de fixation.

12. Procédé selon au moins une des revendications précédentes,
**caractérisé en ce**
**que** le soudage de plastique par ultrasons est effectué dans une première station d'usinage (26) et le soudage de métal par ultrasons dans une deuxième station d'usinage (40).

13. Procédé selon au moins une des revendications précédentes, dans lequel lors du soudage de plastique par ultrasons ainsi que lors du soudage de métal par ultrasons, le faisceau (12) de fils (10) est placé entre une enclume et une sonotrode (28, 40) émettant des ultrasons,
**caractérisé en ce**
**que** le soudage de plastique par ultrasons et le soudage de métal par ultrasons sont effectués dans la même station d'usinage, sachant que dans le soudage de plastique par ultrasons, la sonotrode (48) pour le soudage de métal par ultrasons est l'enclume, et que dans le soudage de métal par ultrasons, la sonotrode (28) pour le soudage de plastique par ultrasons est l'enclume.

14. Procédé selon au moins une des revendications précédentes,
**caractérisé en ce**
**que** la zone dénudée s'étendant entre la gaine (38) métallique et l'isolation des fils (10) formant le faisceau (12) est entourée d'une isolation telle qu'une gaine rétrécissable (45).

15. Dispositif permettant au moyen d'ultrasons l'assemblage par liaison de matière d'un faisceau (12) de fils (10) isolés, avec une chambre de compression d'une soudeuse à ultrasons (26) destinée à loger le faisceau, sachant que la chambre de compression est délimitée sur deux faces opposées par une sonotrode (28, 48) générant des vibrations ultrasonores et une enclume (34, 50) et latéralement par des joues (52, 54),
**caractérisé en ce**
**que** ledit dispositif présente une première et une seconde sonotrodes (28, 48) dont les axes longitudinaux se coupent à angle droit, que ledit dispositif convient aussi bien au soudage de métal par ultrasons qu'au soudage de plastique par ultrasons, que dans le soudage de métal par ultrasons, la seconde sonotrode (28) n'est pas excitée et est l'enclume pour la première sonotrode (48) et la première sonotrode est excitable, et que dans le soudage de plastique par ultrasons, la première sonotrode n'est pas excitée et est l'enclume pour la seconde sonotrode et la seconde sonotrode est excitable.
